# EUROPEAN PATENT APPLICATION

(11) **EP 4 772 412 A1**
(43) Date of publication of application: **08.07.2026**
(21) Application number: 24761322.7
(22) Date of filing: 31.07.2024
(51) Int. Cl.: B60W 30/16

(54) **CONTROL DEVICE AND CONTROL METHOD**

(30) Priority: 30.08.2023 JP 2023140582
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2024/057419
(87) International publication number: WO 2025/046348

(57) **Abstract**

The present invention obtains a control device and a control method capable of appropriately assisting driving of a lean vehicle by a rider.

In a control device (19) and a control method according to the present invention, a specification section of the control device (19) performs, in a position specifying processing in which first processing of specifying a relative position of a lean vehicle (1) with respect to an object in a surrounding of the lean vehicle (1) based on a detection result by a surrounding environment sensor (14) mounted to the lean vehicle (1), and second processing of specifying an absolute position of the lean vehicle (1) based on a comparison result between a specified result of the relative position and a map, are executed, at least the first processing, an execution section of the control device (19) performs a rider assistance operation of assisting driving by a rider, and an acquisition section of the control device (19) acquires reliability information serving as information related to reliability of the position specifying processing, in which the execution section executes the rider assistance operation based on the reliability information.

## Description

### Technical Field

This disclosure relates to a control device and a control method capable of appropriately assisting driving of a lean vehicle by a rider.

### Background Art

Conventionally, various kinds of techniques that support the driving of lean vehicles such as motorcycles by riders have been proposed. For example, PTL 1 discloses a driver support system that warns, based on information detected by a sensor apparatus that detects an obstacle present in a traveling direction or substantially present in the traveling direction, a rider of a motorcycle about an inappropriate approach to the obstacle.

### Citation List

### Patent Literature

PTL 1: JP2009-116882A

### Summary of Invention

### Technical Problem

Meanwhile, as a technique of assisting driving by a rider, there is a technique that uses processing of specifying an absolute position of a lean vehicle, based on a comparison result between a specified result of a relative position of the lean vehicle with respect to an object in the surrounding of the lean vehicle, and a map. Further, when such a technique is used, a new proposal for appropriately assisting driving of the lean vehicle by the rider is desired.

The present invention is made in view of the abovementioned problem, and obtains a control device and a control method capable of appropriately assisting driving of a lean vehicle by a rider.

### Solution to Problem

The control device according to the present invention is a control device of a rider assistance system that assists driving of a lean vehicle by a rider, the control device including: a specification section that performs, in a position specifying processing in which first processing of specifying a relative position of the lean vehicle with respect to an object in a surrounding of the lean vehicle based on a detection result by a surrounding environment sensor mounted to the lean vehicle, and second processing of specifying an absolute position of the lean vehicle based on a comparison result between a specified result of the relative position and a map, are executed, at least the first processing; and an execution section that executes a rider assistance operation of assisting the driving by the rider, and further including an acquisition section that acquires reliability information serving as information related to reliability of the position specifying processing, in which the execution section executes the rider assistance operation based on the reliability information.

The control method according to the present invention is a control method of a rider assistance system that assists driving of a lean vehicle by a rider, the control method including: performing, in a position specifying processing in which first processing of specifying a relative position of the lean vehicle with respect to an object in a surrounding of the lean vehicle based on a detection result by a surrounding environment sensor mounted to the lean vehicle, and second processing of specifying an absolute position of the lean vehicle based on a comparison result between a specified result of the relative position and a map, are executed, at least the first processing, by a specification section of a control device; executing a rider assistance operation of assisting the driving by the rider, by an execution section of the control device; and acquiring reliability information serving as information related to reliability of the position specifying processing, by an acquisition section of the control device, in which the execution section executes the rider assistance operation based on the reliability information.

### Advantageous Effects of Invention

In a control device and a control method according to the present invention, an specification section of the control device performs, in a position specifying processing in which first processing of specifying a relative position of a lean vehicle with respect to an object in a surrounding of the lean vehicle based on a detection result by a surrounding environment sensor mounted to the lean vehicle, and second processing of specifying an absolute position of the lean vehicle based on a comparison result between a specified result of the relative position and a map, are executed, at least the first processing, an execution section of the control device performs a rider assistance operation of assisting driving by a rider, and an acquisition section of the control device acquires reliability information serving as information related to reliability of the position specifying processing, in which the execution section executes the rider assistance operation based on the reliability information. Accordingly, it is possible to assist the driving of the lean vehicle by the rider in accordance with the reliability of the position specifying processing. Therefore, it is possible to appropriately assist the driving of the lean vehicle by the rider.

### Brief Description of Drawings

Fig. 1 is a schematic diagram illustrating a schematic configuration of a lean vehicle according to an embodiment of the present invention.
Fig. 2 is a block diagram illustrating one example of a function configuration of a control device according to the embodiment of the present invention.
Fig. 3 is a block diagram illustrating one example of a function configuration of a server according to the embodiment of the present invention.
Fig. 4 is a diagram illustrating a state where the lean vehicle according to the embodiment of the present invention performs slip-through traveling.
Fig. 5 is a diagram illustrating a state where a group including the lean vehicle according to the embodiment of the present invention performs group traveling.
Fig. 6 is a flowchart illustrating a flow in a first example of processing that is performed by the control device according to the embodiment of the present invention.
Fig. 7 is a flowchart illustrating a flow in a second example of processing that is performed by the control device according to the embodiment of the present invention.
Fig. 8 is a flowchart illustrating a flow in a third example of processing that is performed by the control device according to the embodiment of the present invention.
Fig. 9 is a flowchart illustrating a flow in a fourth example of processing that is performed by the control device according to the embodiment of the present invention.
Fig. 10 is a flowchart illustrating a flow in a fifth example of processing that is performed by the control device according to the embodiment of the present invention. Description of Embodiments

Hereinafter, an embodiment of a control device and a control method according to the present invention will be described with reference to the drawings.

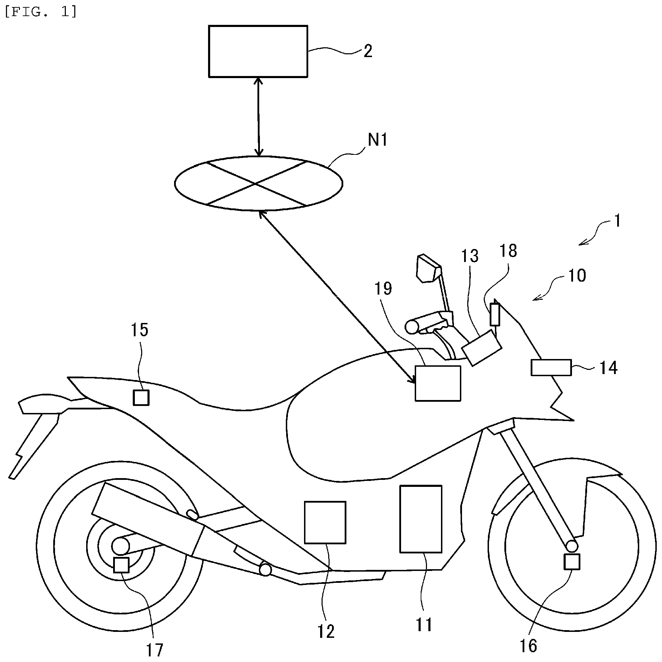

Note that, although a control device that is used in a two-wheeled motorcycle is described below (see a lean vehicle 1 in Fig. 1), a vehicle to be controlled by the control device according to the present invention only needs to be a lean vehicle, and may be another lean vehicle than the two-wheeled motorcycle. The lean vehicle indicates a vehicle in which the vehicle body falls on the right side in turning traveling in the right direction, and the vehicle body falls on the left side in turning traveling in the left direction. The lean vehicle includes, for example, motorcycles (a two-wheeled motor vehicle and a three-wheeled motor vehicle), and a bicycle. The motorcycle includes a vehicle that uses an engine as a power source, a vehicle that uses an electric motor as a power source, and the like. The motorcycle includes, for example, a motorbike, a scooter, and an electric scooter. The bicycle indicates a vehicle capable of traveling on a road by a pedal force of a rider that is applied to pedals. The bicycle includes a usual bicycle, an electric assist bicycle, an electric bicycle, and the like.

Moreover, although a case where an engine (specifically, an engine 11 in Fig. 1, which is described later) is mounted as a drive source capable of outputting power for driving drive wheels is described in the following, another drive source (for example, electric motor) than the engine may be mounted as a drive source, or a plurality of drive sources may be mounted.

Moreover, hereinafter, although a case where a control unit (specifically, a hydraulic pressure control unit 12 in Fig. 1, which is described later) that controls the hydraulic pressure in a brake fluid is employed as a control unit of a braking force that is generated to the wheels is described, a control unit (so-called brake by wire) that controls a position of a braking unit itself of the wheel with an electric signal may be employed, as the control unit of the braking force that is generated to the wheels.

Moreover, the configuration, the operation, and the like to be described in the following are examples, and the control device and the control method according to the present invention are not limited to the case having such the configuration, the operation, and the like.

Moreover, hereinafter, the same or similar descriptions are simplified or omitted as appropriate. Moreover, in the respective drawings, as for the same or similar members or portions, assigning reference numerals thereto is omitted, or the same reference numerals are assigned thereto. Moreover, detailed structures are simplified or omitted as appropriate.

### <Configuration of Lean Vehicle>

With reference to Figs. 1 to 3, a configuration of the lean vehicle 1 according to the embodiment of the present invention will be described.

Fig. 1 is a schematic diagram illustrating a schematic configuration of the lean vehicle 1. The lean vehicle 1 is a two-wheeled motorcycle corresponding to one example of a lean vehicle according to the present invention. As illustrated in Fig. 1, the lean vehicle 1 is mutually communicable wirelessly with a server 2 via a wireless communication network N1. Note that, one lean vehicle 1 is illustrated in Fig. 1 for easy understanding, however, a plurality of vehicles including the lean vehicle 1 are actually communicable with the server 2 via the communication network N1. The plurality of the vehicles communicable with the server 2 include, in addition to the lean vehicle 1, lean vehicles other than the lean vehicle 1, four-wheeled automobiles, and the like.

As illustrated in Fig. 1, the lean vehicle 1 is provided with the engine 11, the hydraulic pressure control unit 12, a display device 13, a surrounding environment sensor 14, an inertial measurement device (IMU) 15, a front-wheel wheel speed sensor 16, a rear-wheel wheel speed sensor 17, a navigation device 18, and a control device (ECU) 19. The lean vehicle 1 is a vehicle in which self-standing is impossible in a stop state. In other words, a rider gets his/her foot on the road surface to support the lean vehicle 1 in a stop state, thereby maintaining an upright state of the lean vehicle 1. Note that, the lean vehicle 1 may be a vehicle in which self-standing is possible in a stop state.

The lean vehicle 1 is provided with a rider assistance system 10 that assists driving of the lean vehicle 1 by the rider. The rider assistance system 10 includes the abovementioned components (in other words, the engine 11, the hydraulic pressure control unit 12, the display device 13, the surrounding environment sensor 14, the inertial measurement device 15, the front-wheel wheel speed sensor 16, the rear-wheel wheel speed sensor 17, the navigation device 18, and the control device 19).

The engine 11 corresponds to one example of a drive source of the lean vehicle 1, and is capable of outputting power for driving a drive wheel (specifically, a rear wheel). For example, the engine 11 is provided with one or a plurality of cylinders in which a combustion chamber is formed in an inside thereof, a fuel injection valve that injects fuel toward the combustion chamber, and an ignition plug. The fuel is injected from the fuel injection valve to form an air-fuel mixture containing air and fuel in the combustion chamber, and the air-fuel mixture is ignited by the ignition plug and burns. Accordingly, a piston provided in the cylinder reciprocates, and a crankshaft rotates. Moreover, a throttle valve is provided in an air-intake pipe of the engine 11 to change the air-intake quantity to the combustion chamber in accordance with the opening degree of throttle that is the opening degree of the throttle valve.

The hydraulic pressure control unit 12 is a unit that has a function of controlling a braking force that is generated to the wheel. For example, the hydraulic pressure control unit 12 is provided on an oil passage that connects a master cylinder to a wheel cylinder, and includes components (for example, a control valve and a pump) for controlling a brake hydraulic pressure of the wheel cylinder. The operation of the component in the hydraulic pressure control unit 12 is controlled to control a braking force to be generated to the wheel. Note that, the hydraulic pressure control unit 12 may respectively control braking forces to be generated to both of a front wheel and a rear wheel, or may control the braking force to be generated to only one of the front wheel and the rear wheel.

The display device 13 has a display function of visually displaying information. Examples of the display device 13 can include a liquid crystal display. The display device 13 is provided in front of handlebars in the lean vehicle 1, for example. Further, an arrangement of the display device 13 with respect to the vehicle body is not specially limited.

The surrounding environment sensor 14 detects surrounding environment information related to an environment in the surrounding of the lean vehicle 1. Specifically, the surrounding environment sensor 14 is provided to a front part of the lean vehicle 1, and detects surrounding environment information in front of the lean vehicle 1. The surrounding environment information detected by the surrounding environment sensor 14 is output to the control device 19.

The surrounding environment information that is detected by the surrounding environment sensor 14 may be information (for example, a relative position, a relative distance, a relative speed, or a relative acceleration) related to a distance to or an orientation of a subject that is positioned in the periphery of the lean vehicle 1, or may be a feature (for example, a type of the subject, a shape of the subject itself, or a mark assigned to the subject) of the subject that is positioned in the periphery of the lean vehicle 1. The surrounding environment sensor 14 is, for example, a radar, a Lidar sensor, an ultrasonic sensor, or a camera.

Note that, the surrounding environment sensor 14 is provided to parts other than the front part of the lean vehicle 1, and may detect surrounding environment information on a location other than that in front of the lean vehicle 1. For example, the surrounding environment sensor 14 may detect surrounding environment information on the rear of the lean vehicle 1, and may detect surrounding environment information on the side of the lean vehicle 1. Moreover, a plurality of the surrounding environment sensors 14 may be provided to the lean vehicle 1, and in that case, surrounding environment information on a plurality of locations can be detected by the respective surrounding environment sensors 14.

The inertial measurement device 15 is provided with a three-axis gyro sensor and a three-direction acceleration sensor, and detects a posture of the lean vehicle 1. The inertial measurement device 15 is provided to the body of the lean vehicle 1, for example. For example, the inertial measurement device 15 detects a lean angle of the lean vehicle 1, and outputs a detection result. The inertial measurement device 15 may detect another physical quantity that can be substantially converted into the lean angle of the lean vehicle 1. The lean angle corresponds to an angle indicating an inclination of the vehicle body (specifically, body) of the lean vehicle 1 in the roll direction with respect to the vertical upward direction. The inertial measurement device 15 may be provided with only parts of the three-axis gyro sensor and the three-direction acceleration sensor.

The front-wheel wheel speed sensor 16 is a wheel speed sensor that detects a wheel speed of the front wheel (for example, a rotational frequency [rpm] per unit time or a movement distance [km/h] per unit time, and the like of the front wheel), and outputs a detection result. The front-wheel wheel speed sensor 16 may detect another physical quantity that can be substantially converted into the wheel speed of the front wheel. The front-wheel wheel speed sensor 16 is provided to the front wheel.

The rear-wheel wheel speed sensor 17 is a wheel speed sensor that detects a wheel speed of the rear wheel (for example, a rotational frequency [rpm] per unit time or a movement distance [km/h] per unit time, and the like of the rear wheel), and outputs a detection result. The rear-wheel wheel speed sensor 17 may detect another physical quantity that can be substantially converted into the wheel speed of the rear wheel. The rear-wheel wheel speed sensor 17 is provided to the rear wheel.

The navigation device 18 is a device that guides a route from a current position of the lean vehicle 1 to a destination that is desired by the rider. The navigation device 18 displays various kinds of information (for example, a current position of the lean vehicle 1, a traveling route to be guided, a position of the destination, a distance on the traveling route from the current position of the lean vehicle 1 to the destination, and arrival time to the destination) related to the route guidance. Moreover, the navigation device 18 can acquire position information on the lean vehicle 1 based on information that is transmitted from the global positioning system (GPS) satellite.

The control device 19 controls the rider assistance system 10. For example, a part or all of the control device 19 includes a microcomputer, a microprocessor unit, a memory, and the like. Moreover, for example, a part or all of the control device 19 may include one whose firmware and the like can be updated, and may be a program module or the like that is executed by a command from a CPU or the like. The control device 19 may be one control device 19 or may be divided into a plurality of the control devices 19, for example.

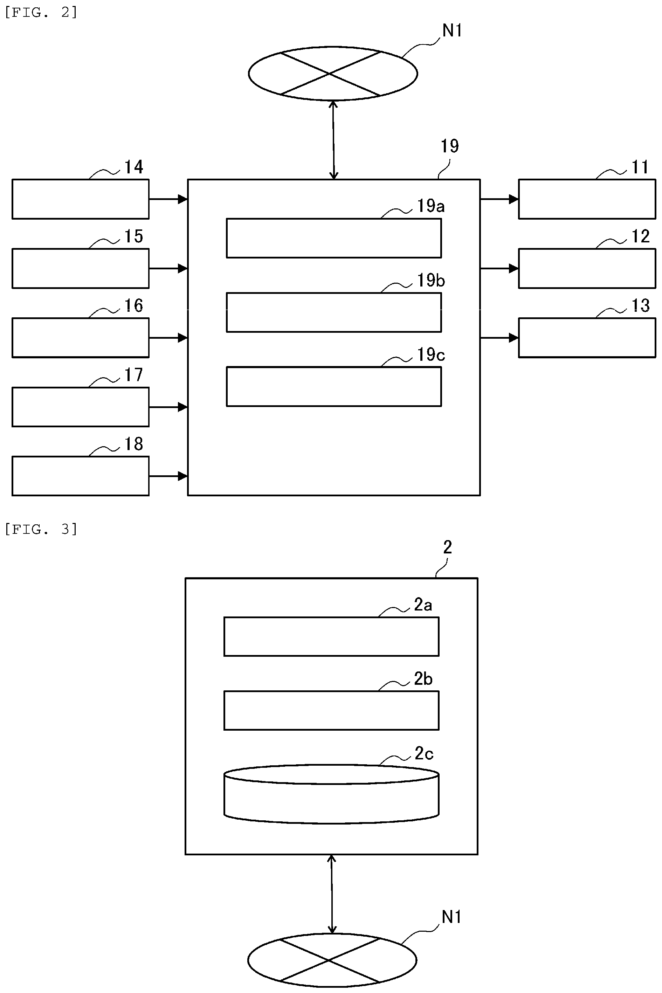

Fig. 2 is a block diagram illustrating one example of a function configuration of the control device 19. As illustrated in Fig. 2, the control device 19 is provided with an acquisition section 19a, a specification section 19b, and an execution section 19c, for example. Moreover, the control device 19 communicates with the respective devices in the rider assistance system 10. Moreover, the control device 19 communicates with the server 2 via the communication network N1.

The acquisition section 19a acquires information from the respective devices in the lean vehicle 1. For example, the acquisition section 19a acquires information from the surrounding environment sensor 14, the inertial measurement device 15, the front-wheel wheel speed sensor 16, the rear-wheel wheel speed sensor 17, and the navigation device 18. Note that, in the present description, the acquisition of information can include the extraction, the creation (for example, calculation), and the like of the information.

The specification section 19b performs processing for specifying an absolute position of the lean vehicle 1. A specified result of the absolute position by the specification section 19b is used for the processing that is performed by the execution section 19c, for example. Note that, details of the processing that is performed by the specification section 19b are described later.

The execution section 19c executes a rider assistance operation. The rider assistance operation is an operation of assisting driving of the lean vehicle 1 by the rider, and can include various kinds of operations. The execution section 19c executes the rider assistance operation by controlling operations of the engine 11, the hydraulic pressure control unit 12, and the display device 13, as appropriate, for example. Note that, details of the rider assistance operation are described later.

The server 2 in Fig. 1 collects and manages information from a plurality of vehicles including the lean vehicle 1, and transmits information to be used for various kinds of processing in each vehicle, to each vehicle. For example, a part or all of the server 2 includes a microcomputer, a microprocessor unit, and the like. Moreover, for example, a part or all of the server 2 may include one whose firmware and the like can be updated, and may be a program module or the like that is executed by a command from a CPU or the like. The server 2 may be one server 2 or may be divided into a plurality of the servers 2, for example.

Fig. 3 is a block diagram illustrating one example of a function configuration of the server 2. As illustrated in Fig. 3, the server 2 is provided with, an acquisition section 2a, a creation section 2b, and a storage section 2c, for example.

The acquisition section 2a acquires information that can be acquired via the communication network N1. For example, the acquisition section 2a acquires information that is transmitted from each vehicle.

The creation section 2b creates or updates, based on the information collected from each vehicle, a map serving as information (for example, information that is used for the rider assistance operation in the lean vehicle 1) to be used for various kinds of processing in each vehicle. In the map, a past detection result by the surrounding environment sensor 14 of each vehicle is associated with map data. Specifically, in the map, enormous detection point data (specifically, data indicating three-dimensional position information in a three-dimensional space) detected by the surrounding environment sensor 14 is integrated. The detection point data includes, for example, detection point data indicating a landmark such as a building, detection point data indicating a position of a lane boundary, and the like.

The storage section 2c stores therein various kinds of information. For example, the storage section 2c stores therein information acquired by the acquisition section 2a. The creation section 2b creates or updates a map based on information to be stored in the storage section 2c. Moreover, for example, the storage section 2c stores therein a map created or updated by the creation section 2b.

### <Operation of Control Device>

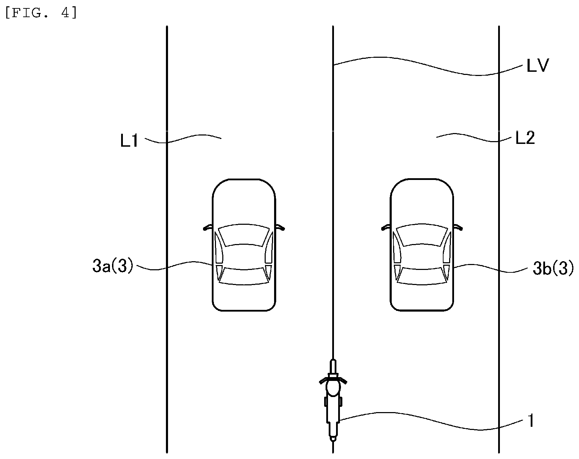

With reference to Figs. 4 to 10, an operation of the control device 19 according to the embodiment of the present invention will be described.

As mentioned above, the specification section 19b of the control device 19 performs processing for specifying an absolute position of the lean vehicle 1. Specifically, the specification section 19b performs position specifying processing as such processing. The specification section 19b executes first processing and second processing, in the position specifying processing. Further, as is described later, the specification section 19b does not need to execute the second processing, in the first processing and the second processing.

In the first processing, the specification section 19b specifies a relative position of the lean vehicle 1 with respect to an object in the surrounding of the lean vehicle 1, based on a detection result by the surrounding environment sensor 14 mounted to the lean vehicle 1. For example, the specification section 19b acquires a plurality pieces of detection point data that is indicated by a current detection result by the surrounding environment sensor 14, as a specified result of the relative position of the lean vehicle 1 with respect to the object in the surrounding of the lean vehicle 1.

The specified result of the relative position acquired in the first processing is used for specifying an absolute position of the lean vehicle 1 in the second processing. Here, the specified result of the relative position acquired in the first processing is also used in creating and updating of a map in the server 2. Therefore, the specification section 19b causes the specified result of the relative position acquired in the first processing to be wirelessly transmitted to the server 2 serving as an external system.

In the second processing, the specification section 19b specifies an absolute position of the lean vehicle 1 based on a comparison result between the abovementioned specified result of the relative position and a map. For example, the specification section 19b acquires a map indicating a range including a current position of the lean vehicle 1 (for example, a range within a predetermined distance centered on the current position), from the server 2. The specification section 19b can acquire, for example, information indicating a rough current position of the lean vehicle 1 from the navigation device 18.

Further, the specification section 19b performs matching of a plurality pieces of detection point data that is indicated from a current detection result by the surrounding environment sensor 14, and detection point data that is indicated on the map. For example, the specification section 19b performs matching of an approximate curved surface indicating a plurality pieces of detection point data that is indicated by the current detection result by the surrounding environment sensor 14, and an approximate curved surface indicating a plurality pieces of detection point data indicating a specific landmark on the map. Thereafter, the specification section 19b specifies an absolute position of the lean vehicle 1, based on an absolute position of the abovementioned specific landmark on the map data, and a relative position of the lean vehicle 1 with respect to the abovementioned specific landmark. Note that, the specification section 19b performs the abovementioned matching by excluding the detection point data indicating a moving object such as a vehicle in the surrounding from the plurality pieces of the detection point data that is indicated by the current detection result by the surrounding environment sensor 14.

The execution section 19c of the control device 19 executes the rider assistance operation, based on a specified result of an absolute position by the specification section 19b. Hereinafter, in the rider assistance operation, an operation to be executed based on a specified result of an absolute position is also called a specification operation. Note that, as is described later, the rider assistance operation can also include operations other than the specification operation.

The execution section 19c may execute an operation of controlling a behavior of the lean vehicle 1, as a specification operation, for example. Examples of the operation of controlling a behavior of the lean vehicle 1 can include adaptive cruise control. The execution section 19c adjusts a positional relationship between the lean vehicle 1 and a target vehicle so as to be a target positional relationship, in the adaptive cruise control.

In the adaptive cruise control, for example, the execution section 19c automatically controls a speed of the lean vehicle 1 using information on the speed of the lean vehicle 1 that is acquired based on a front-wheel wheel speed and a rear-wheel wheel speed, independent of the acceleration-deceleration operation (in other words, an accelerator operation and a brake operation) by the rider. Accordingly, the execution section 19c controls the speed of the lean vehicle 1 such that an inter-vehicle distance between the lean vehicle 1 and a target vehicle becomes a target inter-vehicle distance, for example. Further, the execution section 19c may control the speed of the lean vehicle 1 such that a passing time difference (specifically, the time to be taken from a current time point until the lean vehicle 1 passes a current position of the target vehicle) becomes a target passing time difference. Note that, in the adaptive cruise control, in a case where the target vehicle is not detected by the surrounding environment sensor 14, the execution section 19c controls the speed of the lean vehicle 1 to a set speed set by the rider.

In the adaptive cruise control, for example, a target vehicle is selected among vehicles that are detected by the surrounding environment sensor 14. The execution section 19c changes a detection range of the surrounding environment sensor 14 based on the absolute position of the lean vehicle 1, for example, in the adaptive cruise control. For example, in a case where the lean vehicle 1 travels in a left side or a right side of the traveling lane, the execution section 19c adjusts the detection range of the surrounding environment sensor 14 so as not to overlap with the adjacent lane. In this manner, the execution section 19c can prevent a target vehicle from being erroneously set, for example, by changing the detection range of the surrounding environment sensor 14 in accordance with a traveling position of the lean vehicle 1 in the lane width direction.

Further, an operation of controlling a behavior of the lean vehicle 1 may be operations other than the adaptive cruise control. For example, an operation of controlling a behavior of the lean vehicle 1 may be an operation other than the adaptive cruise control, among operations of adjusting a positional relationship between the lean vehicle 1 and a target vehicle so as to be a target positional relationship. Moreover, for example, an operation of controlling a behavior of the lean vehicle 1 may be an operation of controlling steering of the lean vehicle 1, and the like. Note that, in the operation of controlling steering of the lean vehicle 1, the execution section 19c causes a force that supports an operation force of a steering operation by the rider to be applied on the steering, for example.

Moreover, the execution section 19c may execute an operation of giving a warning to a rider of the lean vehicle 1, as a specification operation, for example. Examples of the operation of giving a warning to a rider include a forward collision warning. The forward collision warning is an operation of warning a rider of an approach of the lean vehicle 1 to a front vehicle. The execution section 19c gives a warning to the rider in the forward collision warning, for example, in a case where a collision possibility between the lean vehicle 1 and the front vehicle exceeds a reference.

For example, the execution section 19c executes a warning to the rider by using the display device 13. Further, a method of a warning to a rider is not limited to the example. For example, the execution section 19c may execute a warning to a rider by using a display device that is provided to an attached object (for example, helmet) of the rider. Moreover, for example, the execution section 19c may execute a warning to a rider by using a sound output device that is provided to the lean vehicle 1 or the attached object of the rider. Moreover, for example, the execution section 19c may execute a warning to a rider by using a vibration generation device that is provided to the lean vehicle 1 or the attached object of the rider. Moreover, for example, the execution section 19c may execute a warning to a rider by causing instantaneous acceleration and deceleration to be generated in the lean vehicle 1. In this case, the instantaneous acceleration and deceleration may be performed using a drive source (for example, the engine 11) of the lean vehicle 1, may be performed using the control unit (for example, the hydraulic pressure control unit 12) for a braking force to be generated to the wheel, or may be performed using a transmission mechanism of the lean vehicle 1.

In the forward collision warning, for example, a front vehicle that is detected by the surrounding environment sensor 14 is set as a warning object. The execution section 19c changes the detection range of the surrounding environment sensor 14 based on the absolute position of the lean vehicle 1, for example, in the forward collision warning. For example, in a case where the lean vehicle 1 travels in a left side or a right side of the traveling lane, the execution section 19c adjusts the detection range of the surrounding environment sensor 14 so as not to overlap with the adjacent lane. In this manner, the execution section 19c can prevent a vehicle with low necessity of becoming a warning object from being erroneously set as a warning object, for example, by changing the detection range of the surrounding environment sensor 14 in accordance with a traveling position of the lean vehicle 1 in the lane width direction.

Further, an operation of giving a warning to a rider may be an operation other than the forward collision warning. For example, the operation of giving a warning to a rider may be an operation of warning the rider of an approach of the lean vehicle 1 to a rear vehicle.

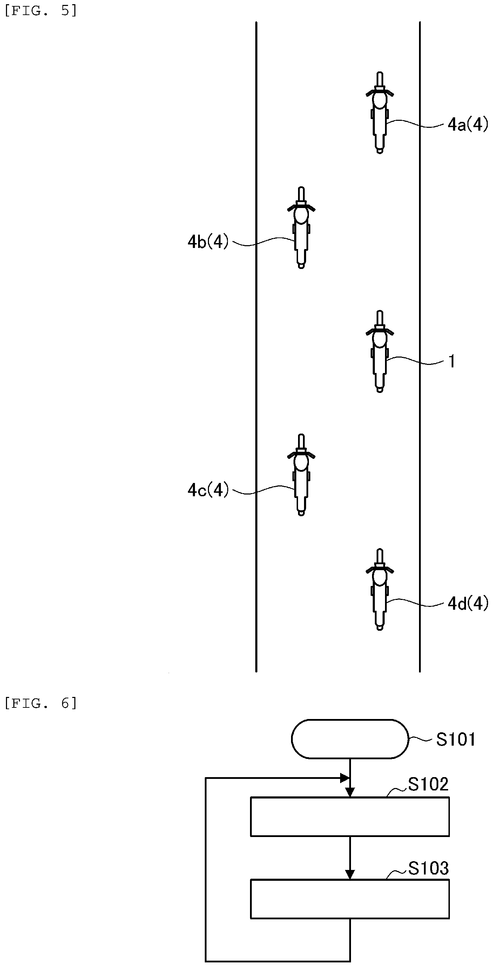

Here, the specification operation to be executed by the execution section 19c may be an operation to be executed under a part of situations. For example, under such a situation that the lean vehicle 1 performs slip-through traveling, which will be described with reference to Fig. 4 hereinafter, the abovementioned various kinds of specification operations may be executed. Moreover, for example, under such a situation that group traveling is performed, which will be described with reference to Fig. 5 hereinafter, the abovementioned various kinds of specification operation may be executed.

Fig. 4 is a diagram illustrating a state where the lean vehicle 1 performs slip-through traveling (so-called, lane splitting). In the example in Fig. 4, the lean vehicle 1 is traveling on a lane boundary LV between adjacent two traveling lanes L1 and L2. Moreover, in Fig. 4, as other vehicles 3 in the surrounding of the lean vehicle 1, other vehicles 3a and 3b are illustrated. Another vehicle 3a is traveling on the traveling lane L1 at the left side, and another vehicle 3b is traveling on the traveling lane L2 at the right side. Another vehicle 3a and another vehicle 3b are traveling side by side in front of the lean vehicle 1. The execution section 19c can determine that the lean vehicle 1 is during slip-through traveling, for example, in a case where the lean vehicle 1 is positioned within a region having a predetermined width centered on the lane boundary LV.

Under the situation in Fig. 4, the execution section 19c may execute the adaptive cruise control, for example, after adjusting the detection range of the surrounding environment sensor 14 such that another vehicle 3a and another vehicle 3b do not enter the detection range. Moreover, under the situation in Fig. 4, the execution section 19c may execute the adaptive cruise control, for example, after making the set speed low. Moreover, under the situation in Fig. 4, the execution section 19c may execute the forward collision warning after adjusting the detection range of the surrounding environment sensor 14 such that another vehicle 3a and another vehicle 3b do not enter the detection range.

Fig. 5 is a diagram illustrating a state where a group including the lean vehicle 1 performs group traveling. In the group traveling, a group constituted by a plurality of lean vehicles including the lean vehicle 1 travels in a plurality of vehicle trains. In Fig. 5, the lean vehicle 1, and other vehicles 4a, 4b, 4c, and 4d, which are parts of other vehicles 4 (in other words, lean vehicles other than the lean vehicle 1 in the group) that constitute the group, are illustrated.

As illustrated in Fig. 5, in the group traveling, the plurality of the lean vehicles travel in two vehicle trains, which are a left-side vehicle train and a right-side vehicle train in the same lane. In the example in Fig. 5, another vehicle 4b and another vehicle 4c constitute the left-side vehicle train. Another vehicle 4b and another vehicle 4c are aligned in this order from the front. On the other hand, another vehicle 4a, the lean vehicle 1, and another vehicle 4d constitute the right-side vehicle train. Another vehicle 4a, the lean vehicle 1, and another vehicle 4d are aligned in this order from the front.

Moreover, as illustrated in Fig. 5, in the group traveling, basically, a plurality of lean vehicles travel in an arrangement in which the lean vehicles constituting the left-side vehicle train and the lean vehicles constituting the right-side vehicle train are alternately aligned in a front-and-rear direction (in other words, arrangement in a zigzag shape). In the example in Fig. 5, another vehicle 4a in the right-side vehicle train, another vehicle 4b in the left-side vehicle train, the lean vehicle 1 in the right-side vehicle train, another vehicle 4c in the left-side vehicle train, and another vehicle 4d in the right-side vehicle train are aligned in this order in the front-and-rear direction from the front.

As mentioned above, in the group traveling by a plurality of lean vehicles, basically, the plurality of the lean vehicles travel in the zigzag shaped arrangement. Accordingly, compared with a case where the plurality of the lean vehicles travel in a single vehicle train, a distance between the respective vehicles in the front-and-rear direction can be shortened. Therefore, the group is prevented from being divided by the signal. The execution section 19c can determine whether a group including the lean vehicle 1 performs group traveling, for example, based on information for identifying another vehicle 4 constituting the group, and a detection result of another vehicle 4. Note that, information for identifying another vehicle 4 may be manually set in advance in the control device 19, or may be automatically created by the control device 19 during the traveling.

Under the situation in Fig. 5, the execution section 19c may execute the adaptive cruise control, for example, after adjusting the detection range of the surrounding environment sensor 14 so as to enlarge to the side of the vehicle train to which the host vehicle does not belong by using the vehicle train to which the host vehicle belongs as a reference (so as to enlarge to the left side in the example in Fig. 5). Accordingly, another vehicle 4b that is a vehicle close to the host vehicle can be set as a target vehicle. Moreover, under the situation in Fig. 5, the execution section 19c may execute the adaptive cruise control, for example, after making the set speed low. Moreover, under the situation in Fig. 5, the execution section 19c may execute the forward collision warning, after adjusting the detection range of the surrounding environment sensor 14 so as to reduce the opposite side thereof to the vehicle train to which the host vehicle does not belong by using the vehicle train to which the host vehicle belongs as a reference (so as to reduce the right side in the example in Fig. 5). Accordingly, a vehicle traveling in the adjacent lane can be prevented from being erroneously set as a warning object.

In the above, various kinds of examples of a specification operation that is an operation to be executed based on a specified result of an absolute position have been described. Further, the execution section 19c may execute an operation other than the operations mentioned in the above as a specification operation. Moreover, the execution section 19c may execute several types of operations as a specification operation. For example, the execution section 19c may execute several types of operations arbitrarily selected from the examples mentioned in the above as a specification operation.

As mentioned above, the position specifying processing that is performed by the specification section 19b is used in various kinds of techniques for assisting driving by a rider. Further, when such a technique is used, a new proposal for appropriately assisting driving of the lean vehicle 1 by the rider is desired. Therefore, in the embodiment, the execution section 19c of the control device 19 executes a rider assistance operation based on reliability information serving as information related to reliability of the position specifying processing. This implements an appropriate assistance of driving of the lean vehicle 1 by the rider, as is described later. Hereinafter, as examples of the processing related to the rider assistance operation to be executed based on reliability information among the processing that is performed by the control device 19, a first example, a second example, a third example, a fourth example, and a fifth example will be sequentially described.

Fig. 6 is a flowchart illustrating a flow of the first example that is performed by the control device 19. Step S101 in Fig. 6 corresponds to a start of a control flow illustrated in Fig. 6.

When the control flow illustrated in Fig. 6 is started, at Step S102, the acquisition section 19a acquires reliability information serving as information related to the position specifying processing.

As mentioned above, in the position specifying processing, first processing (specifically, processing of specifying a relative position of the lean vehicle 1 with respect to an object in the surrounding of the lean vehicle 1 based on a detection result by the surrounding environment sensor 14 mounted to the lean vehicle 1) and second processing (specifically, processing of specifying an absolute position of the lean vehicle 1 based on a comparison result between the abovementioned specified result of the relative position, and a map) are executed. The reliability information may be first reliability information serving as information related to reliability of the first processing, or may be second reliability information serving as information related to reliability of the second processing.

The acquisition section 19a may acquire, for example, information related to reliability for the detection result by the surrounding environment sensor 14, as the first reliability information. Examples of such information can include traveling state information on the lean vehicle 1. The traveling state information is information related to a traveling state of the lean vehicle 1, and can include, for example, a lean angle, a lean angle change rate, a pitch angle, pitch angle change rate, a yaw angle, a yaw angle change rate, a steering angle, a steering angle change rate, a speed, an acceleration, a slip rate of a wheel, and a lateral acceleration, of the lean vehicle 1. Note that, the acquisition section 19a may acquire these pieces of information itself as first reliability information, or may acquire a numerical value or the like indicating the reliability itself created from these pieces of information as first reliability information.

Herein, a posture easily changes in the lean vehicle 1, in comparison with a four-wheeled automobile and the like. Further, in a situation where the posture of the lean vehicle 1 easily changes, due to the posture of the lean vehicle 1 becoming a posture different from a reference posture (for example, a posture in which the lean vehicle 1 stands upright) or the like, the reliability for a detection result by the surrounding environment sensor 14 mounted to the lean vehicle 1 becomes low. For example, in a case where the lean angle of the lean vehicle 1 is excessively large, the acquisition section 19a may acquire information indicating that the reliability for the detection result by the surrounding environment sensor 14 is low, as first reliability information. For example, in a case where the speed of the lean vehicle 1 is excessively high, the acquisition section 19a may acquire information indicating that the reliability for the detection result by the surrounding environment sensor 14 is low, as first reliability information. For example, in a case where a slip is generated to a wheel of the lean vehicle 1, the acquisition section 19a may acquire information indicating that the reliability for the detection result by the surrounding environment sensor 14 is low, as first reliability information.

Note that, the acquisition section 19a may acquire first reliability information based on map information. The map information is stored in the storage section 2c of the server 2, for example, and is transmitted from the server 2. For example, in a case where it has been determined that the lean vehicle 1 is traveling on a curved road based on the map information, the acquisition section 19a may acquire information indicating that the reliability for the detection result by the surrounding environment sensor 14 is low, as first reliability information.

The acquisition section 19a may acquire, for example, information related to reliability for a specified result of an absolute position of the lean vehicle 1, as second reliability information. Such information can include, for example, information related to a communication situation between the lean vehicle 1 and the server 2, information related to an accuracy of specifying a rough current position of the lean vehicle 1 by the navigation device 18, information related to a creation situation of a map in a range including a current position of the lean vehicle 1, and the like. Note that, the acquisition section 19a may acquire these pieces of information itself as second reliability information, or may acquire a numerical value or the like indicating reliability itself created from these pieces of information as second reliability information.

For example, in a case where an abnormality is generated between the lean vehicle 1 and the server 2, the acquisition section 19a may acquire information indicating that the reliability for the specified result of the absolute position of the lean vehicle 1 is low, as second reliability information. For example, in a case where an accuracy of specifying a rough current position of the lean vehicle 1 by the navigation device 18 becomes worse, the acquisition section 19a may acquire information indicating that the reliability for the specified result of the absolute position of the lean vehicle 1 is low, as second reliability information. For example, in a case where a map is not yet created in a range including a current position of the lean vehicle 1, or data in the map is in a shortage, the acquisition section 19a may acquire information indicating that the reliability for the specified result of the absolute position of the lean vehicle 1 is low, as second reliability information.

In the above, the various kinds of examples of the reliability information have been described. Further, the acquisition section 19a may acquire information other than the examples mentioned in the above, as reliability information. Moreover, the acquisition section 19a may acquire several types of information, as reliability information. For example, the acquisition section 19a may acquire several types of information arbitrarily selected from the examples mentioned in the above, as first reliability information. Moreover, for example, the acquisition section 19a may acquire several types of information arbitrarily selected from the examples mentioned in the above, as second reliability information. Moreover, for example, the acquisition section 19a may acquire both of the first reliability information and the second reliability information, as reliability information.

Next to Step S102, at Step S103, the execution section 19c executes an operation of notifying a rider of the lean vehicle 1 of reliability information acquired at Step S102 as a rider assistance operation, and the processing returns to Step S102.

At Step S103, the execution section 19c makes a notification of information indicating whether the reliability of the position specifying processing is higher than a reference, as reliability information, for example. The reference is set to be able to determine whether the reliability of the position specifying processing is high to the extent that the specification operation as an operation to be executed based on a specified result of an absolute position is appropriately executed without any failure, for example. Note that, the execution section 19c may make a notification of information indicating the reliability of the position specifying processing as a numerical value in 100 levels or the like, as reliability information.

For example, the execution section 19c executes the abovementioned notification by using the display device 13. In this case, the execution section 19c may display the extent of the reliability of the position specifying processing with characters, may display with figures, or may display with a change in color, in the abovementioned notification.

As mentioned above, the execution section 19c executes a notification to a rider by using the display device 13, for example. Further, the notification to a rider is not limited to the example. For example, the execution section 19c may execute a notification to a rider by using a display device that is provided to an attached object (for example, helmet) of the rider. Moreover, for example, the execution section 19c may execute a notification to a rider by using a sound output device that is provided to the lean vehicle 1 or the attached object of the rider. Moreover, for example, the execution section 19c may execute a notification to a rider by using a vibration generation device that is provided to the lean vehicle 1 or the attached object of the rider. Moreover, for example, the execution section 19c may execute a notification to a rider by causing instantaneous acceleration and deceleration to be generated to the lean vehicle 1. In this case, the instantaneous acceleration and deceleration may be performed using a drive source (for example, the engine 11) of the lean vehicle 1, may be performed using the control unit (for example, the hydraulic pressure control unit 12) of a braking force to be generated to the wheel, or may be performed using a transmission mechanism of the lean vehicle 1.

As mentioned above, in the first example, the execution section 19c executes an operation of notifying the rider of the lean vehicle 1 of reliability information, as a rider assistance operation. Accordingly, the rider of the lean vehicle 1 can perform driving of the lean vehicle 1, after grasping the reliability of the position specifying processing. Therefore, assisting driving by the rider is appropriately implemented. For example, the rider can perform driving of the lean vehicle 1, after grasping whether the abovementioned specification operation that uses the position specifying processing is appropriately executed.

As mentioned above, the execution section 19c of the control device 19 executes the specification operation that is an operation to be executed based on a specified result of an absolute position. In the second example, the third example, the fourth example, and the fifth example, which will be described hereinafter, as a rider assistance operation to be executed based on the reliability information, an operation related to the specification operation is executed.

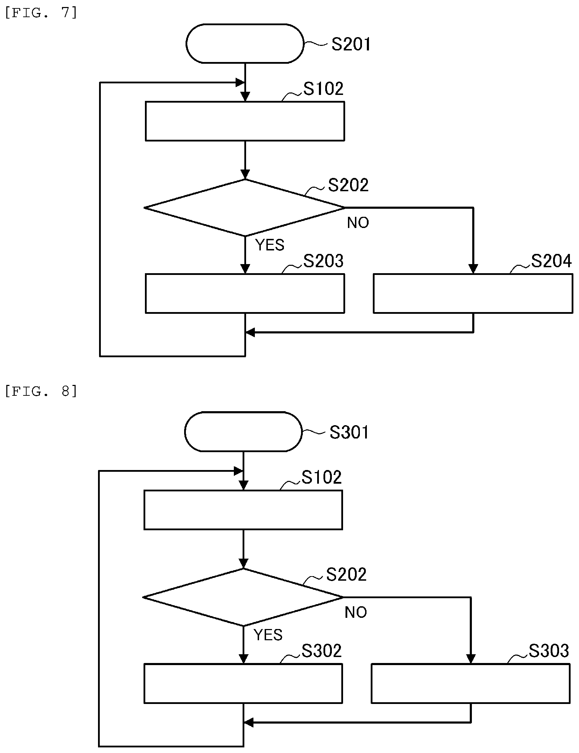

Fig. 7 is a flowchart illustrating a flow of the second example that is performed by the control device 19. Step S201 in Fig. 7 corresponds to a start of a control flow illustrated in Fig. 7.

In the second example in Fig. 7, as compared with the abovementioned first example in Fig. 6, the processing at and after Step S102 is different.

In the second example in Fig. 7, next to Step S102, at Step S202, the execution section 19c determines whether the reliability of the position specifying processing is higher than a reference based on the reliability information.

If it has been determined that the reliability of the position specifying processing is higher than the reference (Step S202/YES), the processing proceeds to Step S203. Further, at Step S203, the execution section 19c permits and enables the specification operation (in other words, causes the specification operation to be in an executable state). On the other hand, if it has been determined that the reliability of the position specifying processing is lower than the reference (Step S202/NO), the processing proceeds to Step S204. Further, at Step S204, the execution section 19c prohibits and disables the specification operation (in other words, causes the specification operation to be in an inexecutable state). Next to Step S203 or Step S204, the processing returns to Step S102.

As mentioned above, the specification operation is an operation to be executed based on a specified result of an absolute position, and may be, for example, an operation of controlling a behavior of the lean vehicle 1 (for example, adaptive cruise control) or may be an operation of giving a warning to a rider of the lean vehicle 1 (for example, forward collision warning). At Step S204 the execution section 19c prohibits these specification operations, for example.

Note that, the execution section 19c may prohibit only a specification operation to be executed under a part of the situation. For example, the execution section 19c may prohibit only a specification operation, such as adaptive cruise control, to be executed under a situation where the lean vehicle 1 performs slip-through traveling described with reference to Fig. 4. Moreover, for example, the execution section 19c may prohibit only a specification operation, such as adaptive cruise control, to be executed under a situation where group traveling described with reference to Fig. 5 is performed.

As mentioned above, in the second example, the execution section 19c executes a specification operation that is an operation to be executed based on a specified result of an absolute position, as a rider assistance operation, and executes the specification operation based on the reliability information. In particular, in the second example, the execution section 19c switches between enabling and disabling of the specification operation based on the reliability information. Accordingly, enabling and disabling of the specification operation can be switched in accordance with the reliability of the position specifying processing. Therefore, assisting driving by the rider is appropriately implemented. For example, under a situation where the reliability of the position specifying processing is low and a specification operation that uses the position specifying processing can be difficult to be appropriately executed, the specification operation can be prohibited and disabled.

Fig. 8 is a flowchart illustrating a flow of the third example that is performed by the control device 19. Step S301 in Fig. 8 corresponds to a start of a control flow illustrated in Fig. 8.

In the third example in Fig. 8, as compared with the abovementioned second example in Fig. 7, the processing at and after Step S202 is different.

In the third example in Fig. 8, next to Step S102, similar to the abovementioned second example in Fig. 7, at Step S202, the execution section 19c determines whether the reliability of the position specifying processing is higher than a reference based on the reliability information.

If it has been determined that the reliability of the position specifying processing is higher than the reference (Step S202/YES), the processing proceeds to Step S302. Further, at Step S302, the execution section 19c cancels the limitation to the function of the specification operation. On the other hand, if it has been determined that the reliability of the position specifying processing is lower than the reference (Step S202/NO), the processing proceeds to Step S303. Further, at Step S303, the execution section 19c limits a part of the function of the specification operation. Next to Step S302 or Step S303, the processing returns to Step S102.

As mentioned above, the specification operation is an operation to be executed based on a specified result of an absolute position, and may be, for example, an operation of controlling a behavior of the lean vehicle 1 (for example, adaptive cruise control) or may be an operation of giving a warning to a rider of the lean vehicle 1 (for example, forward collision warning). At Step S303, the execution section 19c limits a part of the function of these specification operations, for example.

For example, the execution section 19c may limit a function to change the detection range of the surrounding environment sensor 14 based on the absolute position of the lean vehicle 1, in the adaptive cruise control. In that case, the abovementioned function is not executed, but the adaptive cruise control becomes in an executable state.

Moreover, for example, the execution section 19c may limit a function to change the detection range of the surrounding environment sensor 14 based on the absolute position of the lean vehicle 1, in the forward collision warning. In that case, the abovementioned function is not executed, but the forward collision warning becomes in an executable state.

Note that, the execution section 19c may limit a part of the function of only a specification operation to be executed under a part of the situation. For example, the execution section 19c may limit a part of the function of only a specification operation, such as adaptive cruise control, to be executed under a situation where the lean vehicle 1 performs slip-through traveling described with reference to Fig. 4. Moreover, for example, the execution section 19c may limit a part of the function of only a specification operation, such as adaptive cruise control, to be executed under a situation where the group traveling described with reference to Fig. 5 is performed.

As mentioned above, in the third example, the execution section 19c executes a specification operation that is an operation to be executed based on a specified result of an absolute position, as a rider assistance operation, and executes the specification operation based on the reliability information. In particular, in the third example, the execution section 19c changes an aspect of the specification operation based on the reliability information. Accordingly, the aspect of the specification operation can be changed in accordance with the reliability of the position specifying processing. Therefore, assisting driving by the rider is appropriately implemented. For example, under a situation where the reliability of the position specifying processing is low and a function that uses the position specifying processing, among functions of the specification operation, can be difficult to be appropriately executed, the function can be limited.

In the above, as one example of the processing of changing an aspect of the specification operation based on the reliability information, the processing of limiting a part of the function of the specification operation based on the reliability information has been described. Further, the processing of changing an aspect of the specification operation based on the reliability information is not limited to the abovementioned example. For example, the execution section 19c may change a set speed in the adaptive cruise control based on the reliability information. Moreover, for example, the execution section 19c may change a force that supports an operation force of a steering operation in the operation of controlling steering of the lean vehicle 1 based on the reliability information.

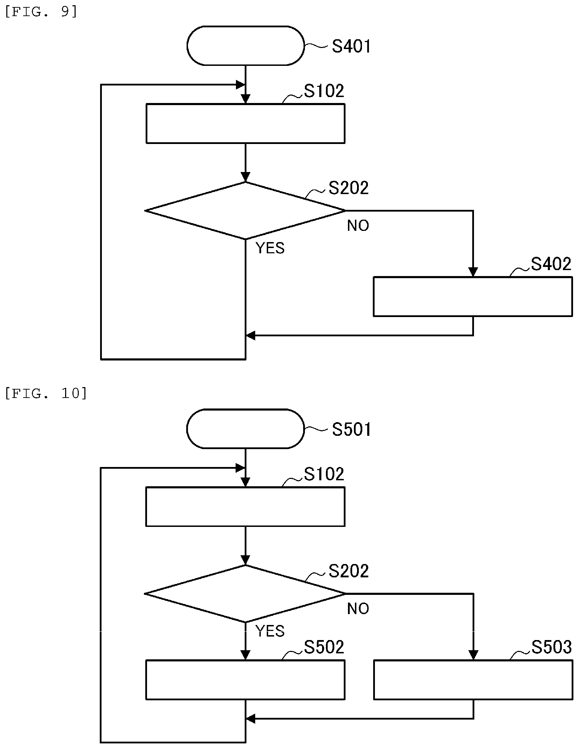

Fig. 9 is a flowchart illustrating a flow of the fourth example that is performed by the control device 19. Step S401 in Fig. 9 corresponds to a start of a control flow illustrated in Fig. 9.

In the fourth example in Fig. 9, as compared with the abovementioned second example in Fig. 7, the processing at and after Step S202 is different. The fourth example in Fig. 9 is performed in parallel with the abovementioned second example in Fig. 7. In other words, the fourth example in Fig. 9 is executed under a situation where a specification operation is prohibited if the reliability of the position specifying processing is lower than a reference.

In the fourth example in Fig. 9, next to Step S102, similar to the abovementioned second example in Fig. 7, at Step S202, the execution section 19c determines whether the reliability of the position specifying processing is higher than a reference based on the reliability information.

If it has been determined that the reliability of the position specifying processing is higher than the reference (Step S202/YES), the processing returns to Step S102. On the other hand, if it has been determined that the reliability of the position specifying processing is lower than the reference (Step S202/NO), the processing proceeds to Step S402. Further, at Step S402, the execution section 19c notifies the rider that the specification operation is prohibited, and the processing returns to Step S102.

As mentioned above, in the fourth example, the execution section 19c executes an operation of notifying the rider of information related to a specification operation that is an operation to be executed based on a specified result of an absolute position, as a rider assistance operation, and executes the operation based on the reliability information. In particular, in the fourth example, the execution section 19c switches between enabling and disabling of an operation of notifying a rider of information related to a specification operation, based on the reliability information. Accordingly, enabling and disabling of an operation of notifying a rider of information related to a specification operation can be switched in accordance with the reliability of the position specifying processing. Therefore, assisting driving by the rider is appropriately implemented. For example, the rider can grasp that the reliability of the position specifying processing is low, and the specification operation that uses the position specifying processing is prohibited.

In the above, the example in which under a situation where a specification operation is executed based on the reliability (specifically, under a situation where a specification operation is prohibited if the reliability of the position specifying processing is lower than a reference), the execution section 19c switches between enabling and disabling of an operation of notifying a rider of information related to the specification operation based on the reliability information has been described. Further, under a situation where a specification operation is executed independent of the reliability, the execution section 19c may switch between enabling and disabling of an operation of notifying a rider of information related to a specification operation, based on the reliability information. For example, if the reliability of the position specifying processing is lower than a reference, under a situation where a specification operation is not prohibited, the execution section 19c may notify the rider of an instruction to prompt for a stop of the specification operation. On the other hand, if the reliability of the position specifying processing is higher than a reference, the execution section 19c does not need to perform such a notification.

Fig. 10 is a flowchart illustrating a flow of the fifth example that is performed by the control device 19. Step S501 in Fig. 10 corresponds to a start of a control flow illustrated in Fig. 10.

In the fifth example in Fig. 10, as compared with the abovementioned second example in Fig. 7, the processing at and after Step S202 is different. The fifth example in Fig. 10 is performed in parallel with the abovementioned third example in Fig. 8. In other words, the fifth example in Fig. 10 is executed under a situation where a part of the function of a specification operation is limited if the reliability of the position specifying processing is lower than a reference.

In the fifth example in Fig. 10, next to Step S102, similar to the abovementioned second example in Fig. 7, at Step S202, the execution section 19c determines whether the reliability of the position specifying processing is higher than a reference based on the reliability information.

If it has been determined that the reliability of the position specifying processing is higher than the reference (Step S202/YES), the processing proceeds to Step S502. Further, at Step S502, the execution section 19c notifies the rider that the limitation of the function of the specification operation is cancelled. On the other hand, if it has been determined that the reliability of the position specifying processing is lower than the reference (Step S202/NO), the processing proceeds to Step S503. Further, at Step S503, the execution section 19c notifies the rider that a part of the function of the specification operation is limited. Next to Step S502 or Step S503, the processing returns to Step S102.

As mentioned above, in the fifth example, the execution section 19c executes an operation of notifying the rider of information related to the specification operation that is an operation to be executed based on a specified result of an absolute position, as a rider assistance operation, and executes the operation based on the reliability information. In particular, in the fifth example, the execution section 19c changes an aspect of the operation of notifying the rider of information related to the specification operation, based on the reliability information. Accordingly, the aspect of the operation of notifying the rider of information related to the specification operation can be changed in accordance with the reliability of the position specifying processing. Therefore, assisting driving by the rider is appropriately implemented. For example, the rider can grasp that the reliability of the position specifying processing is low, and a part of the function of the specification operation that uses the position specifying processing is limited.

In the above, the example in which under a situation where a specification operation is executed based on the reliability (specifically, under a situation where a part of the function of the specification operation is limited if the reliability of the position specifying processing is lower than a reference), the execution section 19c changes an aspect of the operation of notifying the rider of information related to the specification operation based on the reliability information has been described. Further, under a situation where a specification operation is executed independent of the reliability, the execution section 19c may change an aspect of the operation of notifying the rider of information related to the specification operation, based on the reliability information. For example, if the reliability of the position specifying processing is lower than a reference, under a situation where a part of the function of a specification operation is not limited, the execution section 19c may notify the rider of an instruction to prompt for a stop of a part of the function of the specification operation. On the other hand, if the reliability of the position specifying processing is higher than a reference, the execution section 19c may notify a rider that a part of the function of the specification operation does not need to be stopped.

In the foregoing, as the processing examples that are performed by the control device 19, the first example, the second example, the third example, the fourth example, and the fifth example have been described. Further, the processing that is performed by the control device 19 may be processing in which the processing examples described in the above have been changed.

For example, in the above, the processing of executing an operation of notifying the rider of the lean vehicle 1 of reliability information as a rider assistance operation (in the above, the first example in Fig. 6), the processing of switching between enabling and disabling of the specification operation based on the reliability information (in the above, the second example in Fig. 7), the processing of changing an aspect of the specification operation based on the reliability information (in the above, the third example in Fig. 8), processing of switching between enabling and disabling of an operation of notifying the rider of information related to the specification operation based on the reliability information (in the above, the fourth example in Fig. 9), and the processing of changing an aspect of the operation of notifying the rider of information related to the specification operation based on the reliability information (in the above, the fifth example in Fig. 10) have been respectively described. Multiple types of processing arbitrarily selected in the processing may be combined.

For example, the execution section 19c may execute both of the processing of switching between enabling and disabling of the specification operation based on the reliability information (in the above, the second example in Fig. 7) and the processing of changing an aspect of the specification operation based on the reliability information (in the above, the third example in Fig. 8). For example, if the reliability of the position specifying processing is higher than a reference, the execution section 19c may permit and enable the specification operation and does not need to limit a function of the specification operation. Further, if the reliability of the position specifying processing is lower than a reference but is not excessively lower, the execution section 19c permits and enables the specification operation, but may limit a part of the function of the specification operation. On the other hand, if the reliability of the position specifying processing is excessively lower than a reference, the execution section 19c may prohibit and disable the specification operation.

Moreover, for example, the execution section 19c may execute both of or may execute only either one of the processing of executing a specification operation based on the reliability information (in the above, the second example in Fig. 7 or the third example in Fig. 8), and the processing of executing an operation of notifying a rider of information related to the specification operation based on the reliability information (in the above, the fourth example in Fig. 9 or the fifth example in Fig. 10). Moreover, for example, the execution section 19c may execute the processing of executing an operation of notifying the rider of the lean vehicle 1 of reliability information as a rider assistance operation (in the above, the first example in Fig. 6), in addition to at least either one of the processing of executing a specification operation based on the reliability information (in the above, the second example in Fig. 7 or the third example in Fig. 8), and the processing of executing an operation of notifying a rider of information related to the specification operation based on the reliability information (in the above, the fourth example in Fig. 9 or the fifth example in Fig. 10).

Moreover, for example, in the above, the example in which in the map that is used in the second processing, a past detection result by the surrounding environment sensor 14 is associated with map data has been described. Further, information included in the map that is used in the second processing is not limited to the abovementioned example. The map that is used in the second processing only needs to include information that can serve as a comparison object with the specified result of the relative position in the first processing, and can specify an absolute position of the lean vehicle 1.

### <Effect of Control Device>

Effects of the control device 19 according to the embodiment of the present invention will be described.

The control device 19 is provided with: the specification section 19b that performs, in a position specifying processing in which first processing of specifying a relative position of the lean vehicle 1 with respect to an object in the surrounding of the lean vehicle 1 based on a detection result by the surrounding environment sensor 14 mounted to the lean vehicle 1, and second processing of specifying an absolute position of the lean vehicle 1 based on a comparison result between a specified result of the relative position and a map, are executed, at least the first processing; and the execution section 19c that executes a rider assistance operation of assisting driving by a rider. In addition, the control device 19 is provided with the acquisition section 19a that acquires reliability information serving as information related to reliability of the position specifying processing. Further, the execution section 19c executes the rider assistance operation based on the reliability information. Accordingly, it is possible to assist the driving of the lean vehicle 1 by the rider in accordance with the reliability of the position specifying processing. Therefore, it is possible to appropriately assist the driving of the lean vehicle 1 by the rider.

Note that, in the abovementioned example, the example in which the specification section 19b executes both of the first processing and the second processing has been described. Further, the specification section 19b may execute at least the first processing, in the first processing and the second processing.

Preferably, in the control device 19, the specification section 19b executes the second processing, in addition to the first processing. Accordingly, in a case where the control device 19 executes both of the first processing and the second processing, it is possible to appropriately assist the driving of the lean vehicle 1 by the rider.

Preferably, in the control device 19, the specification section 19b causes the specified result of the relative position to be wirelessly transmitted to an external system (in the abovementioned example, the server 2). For example, in a case where the specification section 19b executes only the first processing, in the first processing and the second processing, the specification section 19b causes the specified result of the relative position to be wirelessly transmitted to the external system. In this case, for example, the execution section 19c executes the operation of notifying a rider of reliability information as a rider assistance operation, so that the rider can grasp the effectiveness of the specified result of the relative position that is acquired by the host vehicle and is transmitted to the external system. Accordingly, it is possible to appropriately assist such driving by the rider.

Preferably, in the control device 19, the rider assistance operation to be executed based on the reliability information is an operation of notifying a rider of the reliability information. Accordingly, the rider of the lean vehicle 1 can perform driving of the lean vehicle 1, after grasping the reliability of the position specifying processing. Therefore, assisting driving by the rider is appropriately implemented. For example, the rider can perform driving of the lean vehicle 1, after grasping whether the abovementioned specification operation that uses the position specifying processing is appropriately executed.

Preferably, in the control device 19, the rider assistance operation to be executed based on the reliability information is an operation (in the abovementioned example, specification operation) to be executed based on a specified result of an absolute position. Accordingly, the operation to be executed based on a specified result of an absolute position can be appropriately executed in accordance with the reliability of the position specifying processing. Therefore, assisting driving by the rider is appropriately implemented.

Preferably, in the control device 19, the rider assistance operation to be executed based on the reliability information is an operation of notifying a rider of information related to an operation to be executed based on a specified result of an absolute position (in the abovementioned example, specification operation). Accordingly, the operation of notifying a rider of information related to an operation to be executed based on a specified result of an absolute position can be appropriately executed in accordance with the reliability of the position specifying processing. Therefore, assisting driving by the rider is appropriately implemented.

Preferably, in the control device 19, the execution section 19c switches between enabling and disabling of the rider assistance operation (specifically, the operation to be executed based on a specified result of an absolute position or the operation of notifying a rider of information related to an operation to be executed based on a specified result of an absolute position), based on the reliability information. Accordingly, it is possible to switch between enabling and disabling of the operation to be executed based on a specified result of an absolute position or enabling and disabling of the operation of notifying a rider of information related to an operation to be executed based on a specified result of an absolute position, in accordance with the reliability of the position specifying processing. Therefore, assisting driving by the rider is appropriately implemented.

Preferably, in the control device 19, the execution section 19c changes an aspect of the rider assistance operation (specifically, an operation to be executed based on specified result of an absolute position or the operation of notifying a rider of information related to an operation to be executed based on a specified result of an absolute position), based on the reliability information. Accordingly, it is possible to change an aspect of the operation to be executed based on a specified result of an absolute position or an aspect of the operation of notifying a rider of information related to an operation to be executed based on a specified result of an absolute position, in accordance with the reliability of the position specifying processing. Therefore, assisting driving by the rider is appropriately implemented.

Preferably, in the control device 19, the operation to be executed based on a specified result of an absolute position is an operation of controlling a behavior of the lean vehicle 1. Accordingly, in a case where the operation of controlling a behavior of the lean vehicle 1 is performed by using the position specifying processing, assisting driving by the rider is appropriately implemented.

Preferably, in the control device 19, the operation to be executed based on a specified result of an absolute position is an operation of giving a warning to a rider. Accordingly, in a case where the operation of giving a warning to a rider is performed by using the position specifying processing, assisting driving by the rider is appropriately implemented.

Preferably, in the control device 19, the operation to be executed based on a specified result of an absolute position is an operation specialized in a situation where the lean vehicle 1 performs slip-through traveling. Accordingly, in a case where the operation to be executed under a situation where the lean vehicle 1 performs slip-through traveling is performed by using the position specifying processing, assisting driving by the rider is appropriately implemented.

Preferably, in the control device 19, the operation to be executed based on a specified result of an absolute position is an operation specialized in a situation where group traveling in which a plurality of lean vehicles including the lean vehicle 1 travel in a plurality of vehicle trains is performed. Accordingly, in a case where the operation to be executed under a situation where the group traveling is performed is performed by using the position specifying processing, assisting driving by the rider is appropriately implemented.

Preferably, in the control device 19, the reliability information includes first reliability information serving as information related to reliability of the first processing. Accordingly, by focusing on the reliability of the first processing, it is possible to appropriately acquire information related to the reliability of the position specifying processing, as reliability information.

Preferably, in the control device 19, the reliability information includes second reliability information serving as information related to reliability of the second processing. Accordingly, by focusing on the reliability of the second processing, it is possible to appropriately acquire information related to the reliability of the position specifying processing, as reliability information.

The present invention is not limited the description of the embodiment. For example, only a part of the embodiment may be executed.

### Reference Signs List

1: Lean vehicle
2: Server
2a: Acquisition section
2b: Creation section
2c: Storage section
3: Another vehicle
3a: Another vehicle
3b: Another vehicle
4: Another vehicle
4a: Another vehicle
4b: Another vehicle
4c: Another vehicle
4d: Another vehicle
10: Rider assistance system
11: Engine
12: Hydraulic pressure control unit
13: Display device
14: Surrounding environment sensor
15: Inertial measurement device
16: Front-wheel wheel speed sensor
17: Rear-wheel wheel speed sensor
18: Navigation device
19: Control device
19a: Acquisition section
19b: Specification section
19c: Execution section

## Claims

1. A control device (19) of a rider assistance system (10) that assists driving of a lean vehicle (1) by a rider, the control device comprising:
a specification section (19b) that performs, in a position specifying processing in which first processing of specifying a relative position of the lean vehicle (1) with respect to an object in a surrounding of the lean vehicle (1) based on a detection result by a surrounding environment sensor (14) mounted to the lean vehicle (1), and second processing of specifying an absolute position of the lean vehicle (1) based on a comparison result between a specified result of the relative position and a map, are executed, at least the first processing; and
an execution section (19c) that executes a rider assistance operation of assisting the driving by the rider, and
further comprising an acquisition section (19a) that acquires reliability information serving as information related to reliability of the position specifying processing, wherein
the execution section (19c) executes the rider assistance operation based on the reliability information.

2. The control device according to claim 1, wherein the specification section (19b) executes the second processing, in addition to the first processing.

3. The control device according to claim 1, wherein the specification section (19b) causes the specified result of the relative position to be wirelessly transmitted to an external system (2).

4. The control device according to claim 1, wherein the rider assistance operation is an operation of notifying the rider of the reliability information.

5. The control device according to claim 1, wherein the rider assistance operation is an operation to be executed based on the specified result of the absolute position.

6. The control device according to claim 1, wherein the rider assistance operation is an operation of notifying the rider of information related to an operation to be executed based on the specified result of the absolute position.

7. The control device according to claim 5 or 6, wherein the execution section (19c) switches between enabling and disabling of the rider assistance operation based on the reliability information.

8. The control device according to claim 5 or 6, wherein the execution section (19c) changes an aspect of the rider assistance operation based on the reliability information.

9. The control device according to claim 5 or 6, wherein the operation to be executed based on the specified result of the absolute position is an operation of controlling a behavior of the lean vehicle (1).

10. The control device according to claim 5 or 6, wherein the operation to be executed based on the specified result of the absolute position is an operation of giving a warning to the rider.

11. The control device according to claim 5 or 6, wherein the operation to be executed based on the specified result of the absolute position is an operation specialized in a situation where the lean vehicle (1) performs slip-through traveling.

12. The control device according to claim 5 or 6, wherein the operation to be executed based on the specified result of the absolute position is an operation specialized in a situation where group traveling in which a plurality of lean vehicles including the lean vehicle (1) travel in a plurality of vehicle trains is performed.

13. The control device according to any one of claims 1 to 6, wherein the reliability information includes first reliability information serving as information on reliability of the first processing.

14. The control device according to any one of claims 1 to 6, wherein the reliability information includes second reliability information serving as information on reliability of the second processing.

15. A control method of a rider assistance system (10) that assists driving of a lean vehicle (1) by a rider, the control method comprising:
performing, in a position specifying processing in which first processing of specifying a relative position of the lean vehicle (1) with respect to an object in a surrounding of the lean vehicle (1) based on a detection result by a surrounding environment sensor (14) mounted to the lean vehicle (1), and second processing of specifying an absolute position of the lean vehicle (1) based on a comparison result between a specified result of the relative position and a map, are executed, at least the first processing, by a specification section (19b) of a control device (19);
executing a rider assistance operation of assisting the driving by the rider, by an execution section (19c) of the control device (19); and
acquiring reliability information serving as information related to reliability of the position specifying processing, by an acquisition section (19a) of the control device (19), wherein
the execution section (19c) executes the rider assistance operation based on the reliability information.
